# DEMANDE DE BREVET EUROPEEN

(11) **EP 4 564 169 A1**
(43) Date de publication de la demande: **04.06.2025**
(21) Numéro de dépôt: 24214665.2
(22) Date de dépôt: 21.11.2024
(51) Int. Cl.: G06F 9/50

(54) **PROCÉDÉ DE GESTION D'UNE RESSOURCE D'UN COMPOSANT ÉLECTRONIQUE, DISPOSITIF ET VÉHICULE AUTOMOBILE ASSOCIÉS**

(30) Priorité: 28.11.2023 FR 2313173
(71) Demandeur: Stellantis Auto SAS, 78300 Poissy (FR); FCA US LLC, Auburn Hills, MI 48326-2766 (US)
(72) Inventeur: CELLIER, Ze, 91190 Gif sur Yvette (FR); GHIAZZA, Matteo, 10040 Almese (Turin) (IT)
(74) Mandataire: ESIP

(57) **Abrégé**

Procédé de gestion d'une ressource d'un composant électronique (110) d'un véhicule (100) caractérisé en ce qu'il comprend les étapes suivantes, mise en oeuvre dans le véhicule (100) :
∘ A un premier instant,
∘ Prédiction d'une mise en oeuvre future par la composant électronique (110), d'une pluralité de fonctions, à un instant futur comprenant une consommation d'une première quantité de la ressource durant la mise en oeuvre future,
∘ Comparaison de la première quantité de la ressource avec un seuil,

∘ Si la quantité de la ressource est strictement supérieure au seuil, alors :
∘ A un deuxième instant, précédent l'instant futur, détermination de fonctions à brider parmi la pluralité de fonctions à partir d'un niveau d'impact de chaque fonction de la pluralité de fonctions, puis
∘ A l'instant futur, mise en oeuvre effective de la pluralité de fonctions par le composant électronique (110), les fonctions à brider étant bridées.

## Description

L'invention concerne la gestion d'une ressource d'un composant électronique d'un véhicule automobile. Il existe un besoin d'améliorer la gestion d'une telle ressource de manière à améliorer et à faciliter le fonctionnement du véhicule automobile.

Dans ce but, l'invention concerne un procédé de gestion (autrement dit : procédé de mise en oeuvre) d'une ressource d'un composant électronique d'un véhicule automobile, (pour une mise en oeuvre d'une pluralité de fonctions par le composant électronique) caractérisé en ce qu'il comprend les étapes suivantes, mise en oeuvre dans le véhicule automobile :
∘ A un premier instant :
   ∘ Réception de données contextuelles,
   ∘ A partir de mises en oeuvre passées de chaque fonction d'une pluralité de fonctions par le composant électronique et des données contextuelles, prédiction d'une mise en oeuvre future par la composant électronique, de la pluralité de fonctions, (la mise en oeuvre future étant réalisée) à un instant futur suivant le premier instant, la prédiction de la mise en oeuvre future comprenant une consommation d'(autrement dit : employant ou utilisant) une première quantité de la ressource, durant la mise en oeuvre future (pour mettre en oeuvre la pluralité de fonction),
   ∘ Comparaison de la première quantité de la ressource avec un seuil,
∘ Puis, si la première quantité de la ressource est strictement supérieure au seuil, alors :
   ∘ A un deuxième instant, suivant le premier instant, et précédent l'instant futur, détermination de fonctions à brider parmi la pluralité de fonctions à partir d'un niveau d'impact, sur un fonctionnement du véhicule automobile, d'un bridage de chaque fonction de la pluralité de fonctions,
   ∘ A l'instant futur, mise en oeuvre effective de la pluralité de fonctions par le composant électronique, les fonctions à brider étant bridées durant la mise en oeuvre effective de la pluralité de fonctions.

Par exemple, le seuil est une valeur au-delà de laquelle les performances du composant électronique se dégradent (mais d'autres valeurs sont envisageables). Il peut s'agir, par exemple, de l'enveloppe thermique du composant électronique (dans le cas où la ressource est l'énergie dissipée par le composant)

La détermination des fonctions à brider au deuxième instant permet que les fonctions à brider soient déterminée préalablement à l'instant futur, ce qui permet que les fonctions à brider soient bridées, à l'instant futur, sans nécessiter de délai ou une utilisation additionnelle de la ressource.

La mise en oeuvre effective de la pluralité de fonctions peut être réalisée à la suite de détections d'interactions avec l'interface homme-machine, ou en variante ou en combinaison, de manière automatique.

Le composant électronique peut être un microprocesseur du véhicule automobile, un écran tactile du véhicule automobile, ou tout autre composant électronique du véhicule automobile.

Par exemple, le composant électronique est un microprocesseur du véhicule automobile et chaque fonction de la pluralité de fonctions est mise en oeuvre par une application exécutée par le microprocesseur.

Selon, un mode de réalisation, le composant électronique est apte à commander une interface homme-machine du véhicule automobile (et par exemple, le fonctionnement du véhicule est un fonctionnement de l'interface homme machine du véhicule automobile), et chaque fonction de la pluralité de fonctions peut comprendre une interaction (par exemple un affichage et/ou une saisie) avec l'interface homme machine.

L'interface homme-machine peut être un écran d'affichage, par exemple tactile (situé, par exemple dans l'habitacle du véhicule automobile).

Les données contextuelles peuvent comprendre par exemple, des données temporelles (telles qu'une date courante, une heure courante), météorologiques (telles que la température ambiante, le temps qu'il fait reçu par exemple d'un module de communication radiofréquence avec un réseau de télécommunication mobile du véhicule automobile), de localisation du véhicule automobile (telle qu'une localisation géographique du véhicule automobile reçue par exemple d'un module de géolocalisation satellitaire du véhicule automobile, une information indiquant si le véhicule est sur autoroute, en zone de campagne ou en zone urbaine, ...), des données d'un environnement du véhicule (par exemple, obtenues à partir d'une carte routière et de la localisation géographique du véhicule, ou bien, d'une caméra filmant l'extérieur du véhicule automobile, indiquant par exemple, la présence de commerces, de montagnes, de plans d'eau, de péages autoroutier, d'hôtels, de parkings) et/ou des données obtenues à partir d'interactions avec une interface homme-machine du véhicule automobile (telles qu'une lancement d'une application, une saisie de données, des actions sur un écran tactile), et/ou à partir d'images d'une caméra filmant (l'intérieur de) l'habitacle.

La pluralité de fonctions peut comprendre un guidage routier d'un conducteur du véhicule (à partir d'information de géolocalisation reçu d'un module de géolocalisation satellitaire du véhicule automobile, par exemple de type dit « GPS » et d'une carte routière), une commande de climatisation d'un habitacle du véhicule automobile, une restitution de contenu audio ou vidéo, une navigation internet, un jeu vidéo, un agenda électronique. D'autres fonctions sont bien entendu possibles.

Il apparaîtra clairement à l'homme de métier comment réaliser la prédiction de la mise en oeuvre future, par la composant électronique, de la pluralité de fonctions, et que cette étape peut être réalisée de différentes manières. Une telle prédiction est en effet connue de l'homme de métier. A titre d'exemple, on peut citer les méthodes de prédiction décrites au lien « sentiance.com/predictive-analytics-mobile-sensor-data » et/ou dans les articles suivants :
∘ « Prédiction of user app usage behavior from geo-spatial data », Xiao-Xing ZhaoYuanyuan QiaoZhongwei SiJie YangAnders Lindgren, Computer Science, GeoRich@SIGMOD, 2016.
∘ « Prédiction of Application Usage on Smartphones via Deep Learning », Abdulrahman Alruban, IEEE Access 10:1-1, IEEE Access 10:1-1.

Selon un mode de réalisation, le procédé comprend, durant la prédiction d'une mise en oeuvre future, une étape de détermination, à partir des données contextuelles, d'une deuxième quantité de la ressource, consommée, durant la mise en oeuvre future, par chaque fonction de la pluralité de fonctions, dans lequel, durant la prédiction d'une mise en oeuvre future, la première quantité de la ressource, est déterminée à partir de la deuxième quantité de ressource, consommée par chaque fonction de la pluralité de fonctions.

Dans ce mode de réalisation, les méthodes de prédiction mentionnées ci-dessus peuvent être utilisées pour prédire la deuxième quantité de la ressource, durant la mise en oeuvre future, par chaque fonction de la pluralité de fonctions.

En variante, cette deuxième quantité de la ressource peut-être une constante pour chaque fonction de la pluralité de fonction, quelques soit les données contextuelles. Dans ce cas, la méthode ne prédit pas la deuxième quantité de ressources.

Selon un mode réalisation, la première quantité peut être obtenue par sommation de la deuxième quantité de la ressource, durant la mise en oeuvre future, par chaque fonction de la pluralité de fonctions. En variante, il s'agit du maximum ou d'une moyenne de la deuxième quantité de la ressource consommée, durant la mise en oeuvre future, par chaque fonction de la pluralité de fonctions (pour la pluralité de fonction).

Par exemple, la ressource peut être :
∘ Une mémoire du composant électronique, ou
∘ Une énergie consommée par le composant électronique, ou l'énergie qui peut être dissipée par le composant, appelé aussi enveloppe thermique ou « TDP » (par conception), par exemple grâce aux dispositifs de refroidissement qui l'entourent (par exemple, un ventilateur ou un refroidisseur liquide), ou
∘ Une capacité d'exécution d'instructions par le composant électronique lorsque le composant électronique est un microprocesseur.

Les fonctions à brider peuvent être bridées de diverses manières, par exemple :
∘ Une priorité de mise en oeuvre moins importante peut être assignée aux fonctions à brider qu'aux autres fonctions de la pluralité de fonction,
∘ Une part limitée ou une valeur maximum de la ressource peut être affectée aux fonctions à brider.

Selon un mode de réalisation, durant l'étape de détermination des fonctions à brider, les fonctions à brider sont déterminées de manière à réduire la première quantité de la ressource à une valeur inférieure ou égale au seuil.

En variante, la première quantité est réduite au-delà du seuil.

Selon un mode de réalisation, la détermination des fonctions à brider comprend une étape de détermination d'un niveau de bridage de chaque fonction des fonctions à brider, les fonctions à brider et le niveau de bridage de chaque fonction des fonctions à brider étant déterminés, durant l'étape de détermination des fonctions à brider, à partir d'un niveau d'impact du niveau de bridage, de chaque fonction de la pluralité de fonctions (autrement dit : de chaque fonction des fonctions à brider) , sur le fonctionnement du véhicule automobile.

Par exemple, les fonctions à brider et le niveau de bridage de chaque fonction des fonctions à brider sont déterminées de manière à minimiser le résultat d'une sommation du niveau d'impact du niveau de bridage, de chaque fonction des fonctions à brider, sur le fonctionnement du véhicule.

En variante, les fonctions à brider et le niveau de bridage de chaque fonction des fonctions à brider sont déterminées de manière à minimiser un maximum du niveau d'impact du niveau de bridage, de chaque fonction des fonctions à brider, sur le fonctionnement du véhicule.

Le niveau d'impact peut être l'impact du niveau de bridage sur l'expérience utilisateur.

Il apparaitra clairement à l'homme de métier comment déterminer le niveau impact du niveau de bridage, par exemple dans ce cas, et qu'il existe plusieurs méthodes envisageables pour cela, par exemple :
∘ Durant une mise en oeuvre du procédé selon l'invention (ce qui peut impliquer une mise à jour du niveau d'impact durant la mise en oeuvre du procédé, par exemple en fonction des interactions entre l'utilisateur et l'interface homme-machine) :
   ∘ L'utilisation de l'outil commercialisé par la société dénommée « UXReality » (voir notamment : www.uxreality.com ), ou les méthodes employées par cet outil telles que l'analyse de l'expression du visage,
   ∘ Les différences interactions avec l'interface homme-machine (par exemple, si l'utilisateur interagit avec l'interface homme-manière de la même manière de façon répétée et rapide, cela peut traduire une insatisfaction,
∘ Sur des utilisateur tests : les mêmes méthodes ou en interrogeant les utilisateurs tests sur leur ressenti.

Il est également possible d'employer des méthodes empiriques.

En variante, le niveau d'impact peut être la latence apparente de la fonction sur une interface homme- machine, ou la réactivité du composant électronique pour la mise en oeuvre de ladite chaque fonction.

Selon un mode de réalisation, le premier instant (et/ou le deuxième instant) est séparé de l'instant futur d'une durée comprise entre 10 secondes et 5 minutes, par exemple d'une dureé égale à 2 minutes.

En variante, le premier instant (et/ou le deuxième instant) est séparé de l'instant futur d'une durée inférieure à 10 secondes ou supérieure à 5 minutes.

Par exemple, le premier instant est un instant où a lieu un déverrouillage des ouvrants du véhicule automobile, une mise du contact du véhicule automobile ou un démarrage d'un moteur de propulsion du véhicule automobile, mais bien entendu, le premier instant peut intervenir à d'autres moments et dans d'autres situations.

Selon un mode de réalisation, les fonctions à brider comprennent des fonctions en cours de mise en oeuvre au premier instant, le procédé comprenant une étape de bridage des fonctions en cours de mise en oeuvre faisant partie des fonctions à brider, à un instant compris strictement entre le premier instant ou le deuxième instant et l'instant future.

Ainsi, lorsque la pluralité de fonctions est mise en oeuvre, les fonctions en cours de mise en oeuvre faisant partie des fonctions à brider sont déjà bridées.

En variante, toutes les fonctions à brider sont bridées uniquement lorsque de la pluralité de fonctions est (effectivement) mise en oeuvre, par exemple à l'instant futur.

L'invention concerne aussi un programme d'ordinateur comprenant des instructions exécutables par un microprocesseur ou un microcontrôleur ou un ordinateur, pour mettre en oeuvre les étapes du procédé selon l'invention, lorsqu'il est exécuté par le microprocesseur ou le microcontrôleur ou l'ordinateur.

Le procédé selon l'invention peut être mis en oeuvre par un dispositif électronique (ou un véhicule automobile) qui peut être le composant électronique ou pas. L'invention concerne donc également un dispositif électronique (ou un véhicule automobile) configuré pour mettre en oeuvre les étapes du procédé selon l'invention, ainsi qu'un véhicule automobile comprenant le dispositif électronique.

Les caractéristiques et avantages du programme d'ordinateur, du dispositif électronique, et du véhicule sont identiques à ceux du procédé selon l'invention (sans qu'il soit nécessaire de les répéter ici).

Quand le dispositif électronique, le véhicule automobile, (ou un autre élément) est « configuré pour » (ou « apte à ») réaliser ou mettre en oeuvre une étape ou une opération, cela implique, par exemple, que l'élément comporte des moyens pour réaliser l'étape ou l'opération. Les moyens comprennent préférentiellement des moyens électroniques, par exemple un programme d'ordinateur, des données en mémoire, des circuits électroniques spécialisés, des connexions filaires ou sans fil, un microprocesseur et/ou un microcontrôleur.

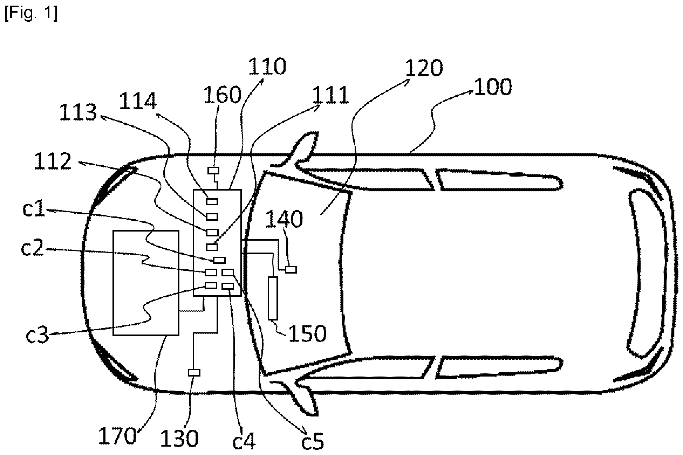

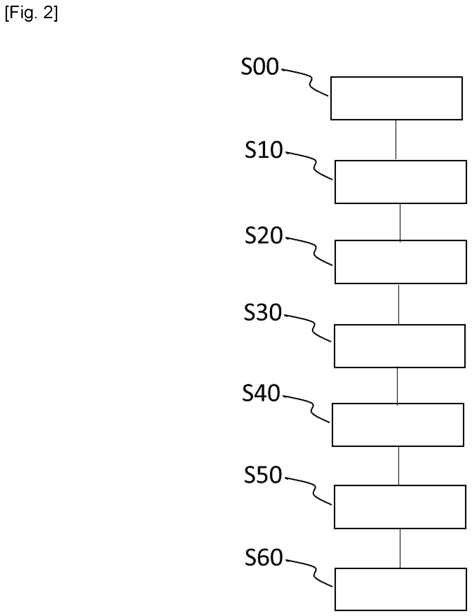

D'autres caractéristiques et avantages de la présente invention apparaitront plus clairement à la lecture de la description détaillée qui suit comprenant des modes de réalisation de l'invention donnés à titre d'exemples nullement limitatifs et illustrés par les dessins annexés, dans lesquels :
∘ [Fig. 1] représente un dispositif électronique et un véhicule automobile, selon un mode de réalisation de l'invention, en vue de dessus,
∘ [Fig. 2] représente une mise en oeuvre du procédé selon l'invention, selon un exemple de réalisation, par le dispositif électronique et le véhicule automobile de la figure 1.

Sur la figure 1, certains éléments sont, bien entendu, vus par transparence.

Description détaillée d'un exemple de réalisation de l'invention, en référence aux figures 1 et 2.

La figure 1 représente un véhicule automobile 100. Le véhicule automobile 100 comprend un habitacle 120, et un microprocesseur 110 auquel est connecté :
∘ Un module de géolocalisation satellitaire 130, par exemple de type dit « GPS »,
∘ Un module de communication radiofréquence 160 avec un réseau de télécommunication mobile,
∘ Un moteur à combustion 170, et un écran 150, qui est tactile, situé dans l'habitacle 120.
∘ Une caméra 140 filmant l'intérieur de l'habitacle.

Le microprocesseur 110 comprend :
∘ Une application 111 d'agenda électronique,
∘ Une application 112 de guidage routier d'un conducteur du véhicule automobile 110, à partir d'information de géolocalisation reçu du module de géolocalisation satellitaire du véhicule automobile 130, par exemple de type dit « GPS » et d'une carte routière (non représentée) en mémoire du microprocesseur 110,
∘ Une application 113 de restitution de contenu vidéo,
∘ Une application 114 de navigation internet.

Le microprocesseur 110 dispose d'une enveloppe thermique de 25 watts, grâce à un ventilateur (non représenté) du microprocesseur 110.

Le microprocesseur 110 comprend 5 coeurs c1, c2, c3, c4 et c5.

Les applications 111, 112, 113 et 114 commandent des interactions, c'est à dire des affichages et des saisies, par l'intermédiaire de l'écran 150, lors de leur exécution par le microprocesseur 110.

En référence à la figure 2, à l'étape S00, le contact du véhicule 100 est mis.

Le microprocesseur 110 démarre alors de manière automatique (il s'agit par exemple d'application démarrées automatiquement à la mise sous contact du véhicule 100) l'application 111 d'agenda électronique et l'application 113 de restitution de contenu numérique.

A l'étape S10, le microprocesseur 110 reçoit des données contextuelles.

Les données contextuelles comprennent par exemple :
∘ La date courante et l'une heure courante, et/ou
∘ La température ambiante, le temps qu'il fait en provenance module de communication radiofréquence 160 avec un réseau de télécommunication mobile, et/ou
∘ La localisation du véhicule automobile (telle qu'une localisation géographique du véhicule automobile 100 reçue par exemple du module géolocalisation satellitaire 130 du véhicule automobile 100, une information indiquant si le véhicule est sur autoroute, en zone de campagne ou en zone urbaine, ...), et/ou
∘ Des données d'un environnement du véhicule (par exemple, obtenues à partir d'une carte routière et de la localisation géographique du véhicule, ou bien, d'une caméra filmant l'extérieur du véhicule automobile, indiquant par exemple, la présence de commerces, de montagnes, de plans d'eau, de péages autoroutier, d'hôtels, de parkings) et/ou
∘ Des données obtenues à partir d'interactions avec l'écran 150 du véhicule automobile 100 (telles qu'un lancement d'une application, une saisie de données ou des actions sur un l'écran tactile 150), ou à partir d'images en provenance d'une caméra 140 filmant (l'intérieur de) l'habitacle 120.

A l'étape S20, le microprocesseur 110 prévoit, à partir d'exécution passées des application 111, 112, 113, 114 et des données contextuelles, que 1 minute après l'étape S20, le conducteur du véhicule 100 va lancer l'applications 112 de guidage routier et l'application 114 en plus des applications 111 et 113.

Pour cela, le microprocesseur 110 peut utiliser les méthodes de prédiction décrites au lien « sentiance.com/predictive-analytics-mobile-sensor-data » et/ou dans les articles suivants :
∘ « Prédiction of user app usage behavior from geo-spatial data », Xiao-Xing ZhaoYuanyuan QiaoZhongwei SiJie YangAnders Lindgren, Computer Science, GeoRich@SIGMOD, 2016.
∘ « Prédiction of Application Usage on Smartphones via Deep Learning », Abdulrahman Alruban, IEEE Access 10:1-1, IEEE Access 10:1-1.

La prédiction indique également les besoins en dispersion d'énergie suivants ;
∘ 4 watts pour l'application 111 d'agenda électronique,
∘ 6 watts pour l'application 112 de guidage routier,
∘ 14 watts pour l'application 113 de restitution de contenu vidéo,
∘ 6 watts pour l'application 114 de navigation internet.

A l'étape S30, le microprocesseur 110 compare la somme de ces dispersions d'énergie, égale à 30 watts, avec l'enveloppe thermique de 25 watts du microprocesseur 110.

La somme, égale à 30 watts, de ces dispersions étant strictement supérieure à l'enveloppe thermique de 25 watts du microprocesseur 110, à l'étape S40, le microprocesseur 110 détermine que :
∘ L'application 111 d'agenda électronique s'exécutera, à l'étape S50 et à l'étape S60, uniquement sur le coeur c1, ce qui revient à brider cette application, et le microprocesseur 110 se configure; de manière connue, pour que l'agenda électronique s'exécute de cette manière,
∘ L'application 114 de navigation internet s'exécutera, à l'étape S60 uniquement sur le coeur c1, ce qui revient à brider cette application,
∘ Les autres applications s'exécuteront à l'étape S60 sur tous les coeurs c1, c2, c3, c4 et c5.

La table 1 donne, ci-dessous, la dissipation d'énergie engendrée (autrement dit : consommée) par chaque application 111, 112, 113 et 114, à l'étape S60, ainsi que l'impact du bridage sur l'expérience client, et le coeur sur lequel l'application est exécutée à cet étape. La somme de ces dissipations est égale à 25 watts, ce qui est égal à l'enveloppe thermique de 25 watts du microprocesseur 110.

**[Table 1]**

| Application | Processeur (niveau de bridage) | | Dissipation d'énergie à l'étape S60 en Watt | | Impact bridage sur l'expérience utilisateur | |
|---|---|---|---|---|---|---|
| 111 | | c1 | | 2 | | 20% |
| 112 | | c1, c2, c3, c4, c5 | | 6 | | 0% |
| 113 | | c1, c2, c3, c4, c5 | | 14 | | 0% |
| 114 | | c1 | | 3 | | 30% |

Pour réaliser une telle détermination, plusieurs hypothèses de bridage de l'exécution pour chaque application 111, 112, 113 et 114 sont envisagées et un impact de ce bridage est estimé. La table 1 est déterminée de manière à minimer la somme des impacts du bridage des applications 111, 112, 113, 114, tout en maintenant la somme des dissipations d'énergie de chaque application 111, 112, 113 et 114 inférieure à 25 watts.

L'impact du bridage peut par exemple être estimé à partir d'image reçues de la caméra 140, et par une analyse de l'expression du visage du conducteur sur ces images. Il peut être également déjà présent en mémoire du microprocesseur 110 après avoir été chargé préalablement dans cette mémoire (et déterminé par des tests préalables au chargement).

A l'étape S50, le microprocesseur 110 exécute l'application 111 d'agenda électronique, sur le coeur c1 uniquement, après s'être configuré, de manière connue, pour cela.

A l'étape S60, environ 1 minute après l'étape S20, le conducteur du véhicule 100 lance les applications 112 et 113 par l'intermédiaire de l'écran 150 et le microprocesseur 110 exécute :
∘ L'application 111 d'agenda électronique sur le coeur c1 uniquement, et
∘ L'application 112 et 113 sur les coeurs c1, c2, c3, c4, c5,
∘ L'application 114 de navigation internet sur le coeur c1 uniquement, après s'être configuré, de manière connue, pour cela.

Durant l'étape S60, à partir des actions du conducteur sur l'écran 150 et des images obtenues par la caméra 140, le microprocesseur peut évaluer et mettre à jour l'impact sur l'expérience client de l'utilisation d'un seul coeur c1 pour l'exécution de l'application 111 et de l'application 114.

Dans les figures S00 à S60, le procédé selon l'invention est mis en oeuvre par le microprocesseur 110. Le procédé peut être mis en oeuvre par d'autres dispositifs électroniques du véhicule 100.

## Revendications

1. Procédé de gestion d'une ressource d'un composant électronique (110) d'un véhicule automobile (100), **caractérisé en ce qu'**il comprend les étapes suivantes, mise en oeuvre dans le véhicule automobile (100) :
∘ A un premier instant :
∘ Réception (S10) de données contextuelles,
∘ A partir de mises en oeuvre passées, par le composant électronique (110), de chaque fonction d'une pluralité de fonctions, et des données contextuelles, prédiction (S20) d'une mise en oeuvre future par le composant électronique, de la pluralité de fonctions, à un instant futur suivant le premier instant, la prédiction (S20) de la mise en oeuvre future comprenant une consommation d'une première quantité de la ressource durant la mise en oeuvre future,
∘ Comparaison (S30) de la première quantité de la ressource avec un seuil,
∘ Si la première quantité de la ressource est strictement supérieure au seuil, alors :
∘ A un deuxième instant, suivant le premier instant, et précédent l'instant futur, détermination (S40) de fonctions à brider, parmi la pluralité de fonctions, à partir d'un niveau d'impact, sur un fonctionnement du véhicule automobile (100), d'un bridage de chaque fonction de la pluralité de fonctions, puis
∘ A l'instant futur, mise en oeuvre effective (S60) de la pluralité de fonctions par le composant électronique (110), les fonctions à brider étant bridées durant la mise en oeuvre effective de la pluralité de fonctions.

2. Procédé de gestion de la ressource selon la revendication précédente dans lequel le composant électronique (110) commande une interface homme-machine (150) du véhicule automobile (100) et chaque fonction de la pluralité de fonctions comprend une interaction avec l'interface homme machine.

3. Procédé de gestion de la ressource selon la revendication précédente comprenant, durant la prédiction d'une mise en oeuvre future, une étape de détermination, à partir des données contextuelles, d'une deuxième quantité de la ressource consommée, durant la mise en oeuvre future, par chaque fonction de la pluralité de fonctions, et dans lequel, durant la prédiction d'une mise en oeuvre future, la première quantité de la ressource, est déterminée à partir de la deuxième quantité de ressource consommée par chaque fonction de la pluralité de fonctions.

4. Procédé de gestion de la ressource selon l'une quelconque des revendications précédentes, dans lequel, durant l'étape de détermination des fonctions à brider, les fonctions à brider sont déterminées de manière à réduire la première quantité de la ressource à une valeur inférieure ou égale au seuil.

5. Procédé de gestion de la ressource, selon l'un quelconque des revendications précédentes, dans lequel la détermination des fonctions à brider comprend une étape de détermination d'un niveau de bridage de chaque fonction des fonctions à brider, les fonctions à brider et le niveau de bridage de chaque fonction des fonctions à brider étant déterminés, durant l'étape de détermination des fonctions à brider, à partir d'un niveau d'impact du niveau de bridage de chaque fonction de la pluralité de fonction sur un fonctionnement du véhicule automobile.

6. Procédé de gestion de la ressource, selon l'un quelconque des revendications précédentes, dans lequel le premier instant est séparé de l'instant futur d'une durée comprise entre 10 secondes et 5 minutes.

7. Procédé de gestion de la ressource, selon l'un quelconque des revendications précédentes, dans lequel les fonctions à brider comprennent des fonctions en cours de mise en oeuvre au premier instant, le procédé comprenant une étape de bridage (S50) des fonctions en cours de mise en oeuvre faisant partie des fonctions à brider, à un instant compris strictement entre le deuxième instant et l'instant future.

8. Programme d'ordinateur comprenant des instructions, exécutables par un microprocesseur ou un microcontrôleur, pour la mise en oeuvre du procédé selon l'une quelconque des revendications 1 à 7, lorsqu'il est exécuté par le microprocesseur ou le microcontrôleur.

9. Dispositif électronique (110) configuré pour mettre en oeuvre les étapes du procédé selon l'une quelconque des revendications 1 à 7.

10. Véhicule automobile (100) comprenant le dispositif électronique (110) selon la revendication précédente.
